# EUROPEAN PATENT SPECIFICATION

(11) **EP 1 511 901 B1**
(45) Date of publication and mention of the grant of the patent: **04.07.2007**
(21) Application number: 03735531.0
(22) Date of filing: 03.06.2003
(51) Int. Cl.: D21H 21/30, D21H 19/36, D21H 17/51, C09B 23/14, C09B 67/24

(54) **WHITENING PIGMENTS**
AUFHELLERPIGMENTE
PIGMENTS DE BLANCHIMENT

(30) Priority: 11.06.2002 EP 02405474
(43) Date of publication of application: 09.03.2005
(73) Proprietor: Ciba Specialty Chemicals Holding Inc., 4057 Basel (CH)
(72) Inventor: CUESTA, Fabienne, FR-68640 Waldighoffen (FR); NAEF, Roland, CH-4142-Münchenstein (CH); DEISENROTH, Ted, Brookfield, CT 06804 (US); ROHRINGER, Peter, CH-4124 Schönenbuch (CH); GRIENENBERGER, Marc, Roger, F-68870 Barthenheim (FR); SCHROEDER, Serge, FR-68128 Rosenau (FR)
(86) International application number: PCT/EP2003/005803
(87) International publication number: WO 2003/104560

(56) References cited:
- EP-A- 0 905 317
- WO-A-01/11140
- WO-A-99/42454
- WO-A-03/033568
- DE-A- 19 920 784
- GB-A- 1 391 593
- GB-A- 1 533 353
- GB-A- 2 284 829
- US-A- 3 757 010
- US-A- 4 405 751

## Description

The present invention relates to novel whitening pigments obtained by reaction of a melamine-formaldehyde and/or melamine-urea polycondensate with a water soluble fluorescent whitening agent containing polymerisable groups, a process for preparation of the whitening pigments and their use for the fluorescent whitening of paper, especially in coating, for the fluorescent whitening and improvement of sun protection factors of textile materials and for improving the aspect of solid detergent compositions. Further disclosed are certain novel fluorescent whitening agents suitable for preparation of the whitening pigments and a process for their preparation.

Aqueous coating compositions are used extensively in the production of coated papers and cardboards. For the purpose of whitening, the coating compositions generally comprise anionic fluorescent whitening agents, the action of which is highly dependent on the amount and nature of co-binders used. The use of cationic coating compositions for example for ink-jet papers, results in a loss of effect, for example poor fastness to light, bleeding in food packaging and a deterioration in printability. Similar problems can also occur in the case of pulp or size press applications.

One approach to solving such problems has been disclosed in WO 01/11140 A1, whereby mechanical mixtures of melamine-formaldehyde or phenol-formaldehyde polycondensation products together with water-soluble fluorescent whitening agents are used as whitening pigments for coating compositions. However, such mixtures suffer from the disadvantage that only very minor quantities of fluorescent whitening agents are incorporated into large amounts of the polycondensate, thus leading to difficulties in dosage and resulting in large quantities of the polycondensate being present in the coating composition, which may be undesirable.

GB 2 284 829 A discloses a filler composition comprising a water insoluble organic polymer, which is preferably a urea/formaldehyde resin, together with a fluorescent whitening agent. However, it has been found that only relatively small quantities of whitening agents are capable of being incorporated into such polymers.

In US 4,405,751, there are described aqueous dispersions of aminoplastic resins which may be prepared in the presence of dyes or fluorescent whitening agents. However, no indication of the degree of whiteness obtainable with such dispersions is revealed and the whiteners used are typical conventional products.

Similar aqueous solutions of water soluble conventional fluorescent whitening agents and aminoplast pre-condensates are disclosed in GB 1,533,353, but the aim of the invention is to provide concentrated aqueous solutions which are stable to storage.

GB 1, 391, 393 discloses a coating composition for whitening of paper in which the negative influence of synthetic latex binders on the whitening effects of conventional fluorescent whitening agents is overcome. The composition comprises an amide/formaldehyde resin and a water soluble oxyethylated or oxypropylated alcohol or ether thereof such as polyethylene glycol. Again, conventional fluorescent whitening agents are employed, whereby considerable amounts are required to achieve high degrees of whiteness.

Surprisingly, it has now been found that coating compositions possessing superior properties result by the incorporation of a whitening pigment resulting from reaction of a melamine-formaldehyde and/or melamine-urea polycondensate with a water soluble fluorescent whitening agent containing polymerisable groups, since the fluorescent whitener is protected from environmental influences.

Accordingly, the present invention relates to a whitening pigment comprising the reaction product of
(a) a melamine-formaldehyde and/or a melamine-urea polycondensation product and
(b) a water-soluble fluorescent whitening agent of the formula 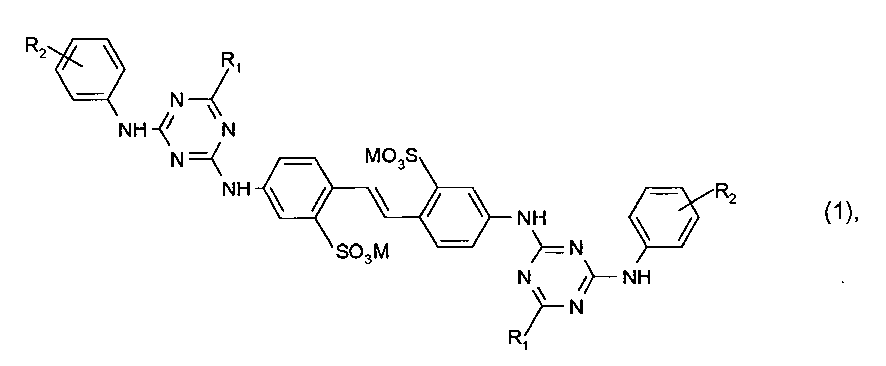
wherein
- R₁: represents -OH, -OC₁-C₄alkyl, -Oaryl, -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino, pyrrolidino or the residue of an amino acid from which a hydrogen atom has been abstracted from the amino group,
- R₂: represents -CONH₂, -CONHC₁-C₄alkyl or -COOM and
- M: is hydrogen, sodium, potassium, calcium, magnesium, ammonium, mono- di-, tri- or tetra-substituted C₁-C₄alkylammonium or C₂-C₄hydroxyalkylammonium or mixtures thereof.

In one preferred aspect of the invention the component (a) is a melamine-formaldehyde polycondensation product.

Condensation products of melamine and formaldehyde, also referred to as melamine-formaldehyde (MF) resins, are aminoplastic resins.

The said condensation products are prepared by acid- or base-catalysed reaction of melamine in a methylolation reaction with aqueous formaldehyde solutions to form N-methylol compounds. On extending the reaction time or increasing the temperature, the methylol groups then react with further melamine, forming methylene bridges or - when methylol groups react with one another - methylol ether bridges.

The reaction is usually halted at the stage where preliminary condensation products, which are still soluble or meltable, are present, in order for fillers to be added if desired. To improve the solubility of those preliminary condensation products, some of the methylol groups still remaining may, in addition, be etherified.

Etherification of the N-methylol compounds may also be carried out, after azeotropically distilling off the water with alcohols or glycols, or by spray-drying, by etherifying the practically water-free methylol-melamines with lower alcohols or glycols, with the addition of acid or alkaline catalysts, neutralising after etherification and, where appropriate, distilling off the excess alcohol or glycol.

Most preferred resins are tri- or penta-methylolmelamines which may be etherified with, for example, methanol or methanol/diethylene glycol mixtures.

Furthermore, in the compound of formula (1), R₁ preferably represents -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino or pyrrolidino, especially, R₁ represents -N(C₁-C₄alkyl)₂, -N(C₂-C₄hydroxyalkyl)₂, -N(C₁-C₄alkyl)(C₂-C₄hydroxyalkyl), -N(C₁-C₄alkoxy-C₁-C₄alkyl)₂ or morpholino.

Alternatively, in the compound of formula (1), R₁ preferably represents an amino acid residue from which a hydrogen atom has been abstracted from the amino group, especially those amino acid residues R₁ which are derived from glycine, alanine, sarcosine, serine, cysteine, phenylalanine, tyrosine (4-hydroxyphenylalanine), diiodotyrosine, tryptophan (β-indolylalanine), histidine ((β-imidazolylalanine), α-aminobutyric acid, methionine, valine (α-aminoisovaleric acid), norvaline, leucine (α-aminoisocaproic acid), isoleucine (α-amino-β-methylvaleric acid), norleucine (α-amino-n-caproic acid), arginine, ornithine (α,δ-diaminovaleric acid), lysine (α,ε-diaminocaproic acid), aspartic acid (aminosuccinic acid), glutamic acid (α-aminoglutaric acid), threonine, hydroxyglutamic acid, iminodiacetic acid or taurine, or a mixture or an optical isomer thereof, whereby sarcosine, taurine, iminodiacetic acid and aspartic acid residues are particularly preferred and, most especially, an aspartic acid or a sarcosine residue.

M, in the compound of formula (1), preferably represents hydrogen, sodium or potassium.

Most preferred, water soluble fluorescent whitening agents are those of the formula (1) in which R₁ represents a sarcosine, taurine or aspartic acid residue, R₂ is -CONH₂, -CONHC₁-C₄alkyl, especially -CONHCH₃, or -COOM and M is sodium.

C₁-C₄Alkyl radicals are branched or unbranched and are, for example, methyl, ethyl, propyl, isopropyl or n-butyl; they may be unsubstituted or substituted by halogen, for example fluorine, chlorine or bromine, C₁-C₄alkoxy, for example methoxy, ethoxy, propoxy, isopropoxy or n-butoxy whilst C₂-C₄hydroxyalkyl may, for example, be hydroxyethyl, hydroxypropyl or hydroxybutyl. Aryl is preferably phenyl, which is unsubstituted or substituted by one or two C₁-C₄alkyl- or C₁-C₄alkoxy radicals or by halogen.

The whitening pigments of the invention may be prepared by addition of the compound of formula (1) to an excess of the melamin-formaldehyde and/or melamine-urea polycondensate in aqueous media under acidic conditions resulting from the addition of stong mineral acid, for example, concentrated hydrochloric acid. The mixture is then stirred, preferably at elevated temperature, for example, at between 50 and 90°C, preferably 65 to 75°C until reaction is complete and, subsequently, basifying the reaction mixture with strong inorganic base, for example, an alkali metal hydroxide such as sodium hydroxide. The resulting aqueous suspension may be used directly in the coating colour or, preferably, is filtered, the resulting whitening pigment dried and then ground to a suitable particle size.

The whitening pigments used in accordance with the invention are preferably obtained by reaction of
(a) from 75 to 99% by weight, preferably from 85 to 95% by weight, of a melamine-formaldehyde and/or melamine-urea polycondensation product and
(b) from 1 to 25% by weight, preferably from 5 to 15% by weight, of a water-soluble fluorescent whitening agent of formula (1).

Some of the water-soluble fluorescent whitening agents of formula (1) are known compounds. However, other fluorescent whitening agents especially suitable for preparation of the whitening pigments of the invention are novel.

Consequently, a further aspect of the invention is a compound of formula 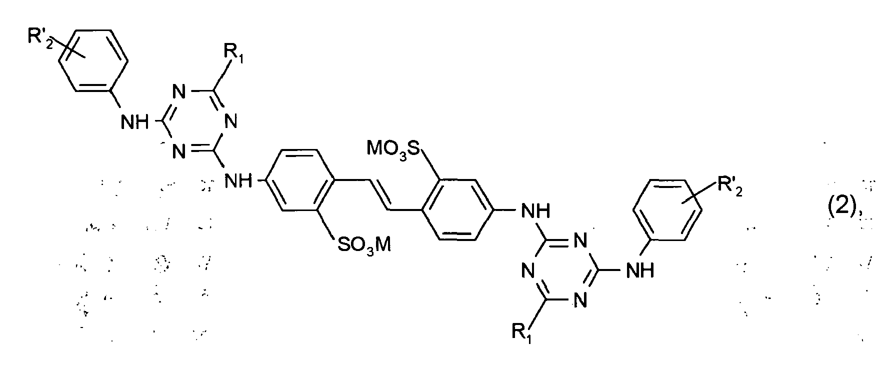 in which
- R₁: represents -OH, -OC₁-C₄alkyl, -Oaryl, -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino, pyrrolidino or the residue of an amino acid from which a hydrogen atom has been abstracted from the amino group,
- R'₂: represents -CONH₂, -CONHC,-C₄alkyl or -COOM and
- M: is hydrogen, sodium, potassium, calcium, magnesium, ammonium, mono- di-, tri- or tetra-substituted C₁-C₄alkylammonium or C₂-C₄hydroxyalkylammonium or mixtures thereof.

Furthermore, in the compound of formula (2), R₁ preferably represents -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino or pyrrolidino, especially, R₁ represents -N(C₁-C₄alkylh, -N(C₂-C₄hydroxyalkyl)₂, -N(C₁-C₄alkyl)(C₂-C₄hydroxyalkyl), -N(C₁-C₄alkoxy-C₁-C₄alkyl)₂ or morpholino.

Alternatively, in the compound of formula (1), R₁ preferably represents an amino acid residue from which a hydrogen atom has been abstracted from the amino group, especially those amino acid residues R₁ which are derived from glycine, alanine, sarcosine, serine, cysteine, phenylalanine, tyrosine (4-hydroxyphenylalanine), diiodotyrosine, tryptophan (β-indolylalanine), histidine ((β-imidazolylalanine), α-aminobutyric acid, methionine, valine (α-aminoisovaleric acid), norvaline, leucine (α-aminoisocaproic acid), isoleucine (α-amino-β-methylvaleric acid), norleucine (α-amino-n-caproic acid), arginine, ornithine (α,δ-diaminovaleric acid), lysine (α,ε-diaminocaproic acid), aspartic acid (aminosuccinic acid), glutamic acid (α-aminoglutaric acid), threonine, hydroxyglutamic acid, iminodiacetic acid or taurine, or a mixture or an optical isomer thereof, whereby sarcosine, taurine, iminodiacetic acid and aspartic acid residues are particularly preferred and, most especially, an aspartic acid or a sarcosine residue.

### M, in the compound of formula (2), preferably represents hydrogen, sodium or potassium:

Most preferred, water soluble fluorescent whitening agents are those of the formula (2) in which R₁ represents a sarcosine, taurine or aspartic acid residue, R'₂ is -CONH₂, -CONHC₁-C₄alkyl, especially -CONHCH₃, or -COOM and M is sodium.

The compounds of formula (1) may be produced by reacting, under known reaction conditions, cyanuric chloride, successively, in any desired sequence, with each of 4,4'-diamino-2,2'-stilbene disulfonic acid or a salt thereof, an amino compound capable of introducing a group 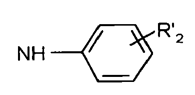 and a compound capable of introducing a group R₁, in which R₁ and R'₂ are as previously defined.

The starting materials are known compounds, which are readily available.
The finely particulate whitened whitening pigments can, after dry-grinding, be incorporated in powder form directly in the paper coating composition, the particle size being from 0.05 to 40 µm, preferably from 0.3 to 10 µm and especially from 0.5 to 5 µm.

In most instances, however, it will probably be more convenient to disperse the finely particulate whitening pigments in an aqueous phase and to incorporate the resulting aqueous dispersion in the paper coating compositions.

The amount of whitening pigments for use according to the invention employed in the paper coating composition depends on the desired whitening effect; it is usually from 0.01 to 5% by weight of pure active substance, based on the melamine-formaldehyde and/or melamine-urea polycondensation product used.

The paper coating compositions generally have a solids content of from 35 to 80% by weight, preferably from 40 to 70% by weight. In addition to the whitening pigment for use according to the invention, they generally comprise (all amounts based on the pigment)
(i) 60 to 150 parts by weight of inorganic pigment,
(ii) from 3 to 25 parts by weight of binder, of which optionally up to half consists of natural (i.e. non-synthetic) co-binder (for example starch, casein),
(iii) up to 1 part by weight of thickener and
(iv) up to 2 parts by weight of wet-strength agent.

The whitening pigments according to the invention are excellently suitable for whitening the optionally pigmented coating compositions customarily used in the textile, paint, adhesives, plastics, wood and paper industries. Such coating compositions comprise, as binders (co-binders), plastics dispersions based on copolymers of butadiene and styrene, of naphthalene sulphonic acids and formaldehyde, of polyethylene and polypropylene oxides, of acrylonitrile, butadiene and styrene, of acrylic acid esters, of ethylene and vinyl chloride and of ethylene and vinyl acetate, or homopolymers, such as polyvinyl chloride, polyvinylidene chloride, polyethylene, polyvinyl acetate, polyvinyl alcohol, or polyurethane.

For the purpose of pigmenting the coating compositions there are generally employed aluminium silicates, such as China clay or kaolin, and also barium sulfate, satin white, titanium dioxide or calcium compounds for paper. These are described by way of example in J.P. Casey "Pulp and Paper; Chemistry and Chemical Technology", 2nd Ed. Vol. III; p. 1648-1649 and in Mc Graw-Hill "Pulp and Paper Manufacture", 2nd Ed. Vol. II, p. 497 and in EP-A-0 003 568.

The whitening pigments according to the invention may be used especially for the coating of paper, more especially ink-jet and photographic paper, wood, foils, textiles, non-woven materials and suitable building materials. Special preference is given to use on paper and cardboard and on photographic and ink-jet papers.

Consequently, a further aspect of the invention is paper, which has been treated with a coating composition as described above.

The coatings or coverings so obtained have, in addition to a high degree of fastness to light, an excellent degree of whiteness. Evenness, smoothness, volume and printability properties are also improved because the whitening pigments used in accordance with the invention remain in the paper matrix as additional filler and have a favourable effect on the printability of the paper. Furthermore, due to their excellent bleed-fastness, such coatings are eminently suitable for use in food packagings.

In one further aspect of the invention, the whitening pigments provide a method for increasing the SPF (Sun Protection Factor) rating or for the fluorescent whitening of a textile fibre material, comprising treating the textile fibre material with 0.05 to 5.0% by weight, based on the weight of the textile fibre material, with one or more of the whitening pigments of the invention, as previously defined.

Textile fibres treated according to the method of the present invention may be natural or synthetic fibres or mixtures thereof. Examples of natural fibres include vegetable fibres such as cotton, viscose, flax, rayon or linen, preferably cotton and animal fibres such as wool, mohair, cashmere, angora and silk, preferably wool. Synthetic fibres include polyester, polyamide and polyacrylonitrile fibres. Preferred textile fibres are cotton, polyamide and wool fibres.

Preferably, textile fibres treated according to the method of the present invention have a density of less than 200g/m² and have not been previously dyed in deep shades.

Some of the whitening pigments used in the method of the present invention may be only sparingly soluble in water and may need to be applied in dispersed form. For this purpose, they may be milled with an appropriate dispersant, conveniently using quartz balls and an impeller, down to a particle size of 1-2 microns.

As dispersing agents for such sparingly-soluble compounds of formula (1) there may be mentioned:
- acid esters or their salts of alkylene oxide adducts, e.g., acid esters or their salts of a polyadduct of 4 to 40 moles of ethylene oxide with 1 mole of a phenol, or phosporic acid esters of the adduct of 6 to 30 moles of ethylene oxide with 1 mole of 4-nonylphenol, 1 mole of dinonylphenol or, especially, with 1 mole of compounds which have been produced by the addition of 1 to 3 moles of styrenes on to 1 mole of phenol;
- polystyrene sulphonates;
- fatty acid taurides;
- alkylated diphenyloxide-mono- or -di-sulphonates;
- sulphonates of polycarboxylic acid esters;
- addition products of 1 to 60, preferably 2 to 30 moles of ethylene oxide and/or propylene oxide on to fatty amines, fatty amides, fatty acids or fatty alcohols, each having 8 to 22 carbon atoms, or on to tri- to hexavalent C₃-C₆alkanols, the addition products having been converted into an acid ester with an organic dicarboxylic acid or with an inorganic polybasic acid;
- lignin sulphonates and, in particular,
- formaldehyde condensation products, e.g., condensation products of lignin sulphonates and/or phenol and formaldehyde; condensation products of formaldehyde
   with aromatic sulphonic acids, e.g., condensation products of ditolylethersulphonates and formaldehyde; condensation products of naphthalenesulphonic acid and/or naphthylaminesulphonic acids and formaldehyde; condensation products of phenolsulphonic acids and/or sulphonated dihydroxydiphenylsulphone and phenols and cresols with formaldehyde and/or urea; or condensation products of diphenyloxide-disulphonic acid derivatives with formaldehyde.

Depending on the type of whitening pigment, it may be beneficial to carry out the treatment in a neutral, alkaline or acidic bath. The method is usually conducted in the temperature range of from 20 to 140°C, for example, at or near the boiling point of the aqueous bath, e.g., at about 90°C.

Solutions of the whitening pigments, or their emulsions in organic solvents may also be used in the method of the present invention. For example, the so-called solvent dyeing (pad thermofix application) or exhaust dyeing methods in dyeing machines may be used. If the method of the present invention is combined with a textile treatment or finishing method, such combined treatment may be advantageously carried out using appropriate stable preparations which contain the whitening pigment in a concentration such that the desired SPF improvement or degree of whiteness is achieved.

In certain cases, the whitening pigment is made fully effective by an after-treatment. This may comprise a chemical treatment such as treatment with an acid, a thermal treatment or a combined thermal/chemical treatment.

It is often advantageous to use the whitening pigment in admixture with an assistant or extender such as sodium sulphate, sodium sulphate decahydrate, sodium chloride, sodium carbonate, an alkali metal phosphate such as sodium or potassium orthophosphate, sodium or potassium pyrophosphate or sodium or potassium tripolyphosphate, or an alkali metal silicate such as sodium silicate.

In addition to the whitening pigment, a minor proportion of one or more adjuvants may also be employed in the method of the present invention. Examples of adjuvants include emulsifiers, perfumes, bleaching agents, enzymes, colouring dyes, opacifiers, further optical whitening agents, bactericides, nonionic surfactants, fabric care ingredients, anti-gelling agents such as nitrites or nitrates, especially sodium nitrate, and corrosion inhibitors such as sodium silicate.

The amount of each of these optional adjuvants should not exceed 1%, and preferably ranges from 0.01 to 1% by weight on the treated fibre.

The method of the present invention, in addition to providing protection to the skin, also increases the useful life of a textile article treated according to the present invention. In particular, the tear resistance and/or light fastness of the treated textile fibre material may be improved.

The present invention also provides a textile fabric produced from a fibre treated according to a method of the present invention as well as an article of clothing produced from the said fabric.

Such textile fabrics and articles of clothing produced from the said fabrics typically have an SPF rating of 20 and above, whereas untreated cotton, for example, generally has an SPF rating of from 2 to 4.

In one final aspect, the whitening pigments of the invention may be added to solid detergent compositions in order to improve the white appearance of such detergents, especially in powder form.

Typically such detergent compositions may comprise:
i) 5-90%, preferably 5-70% of an anionic surfactant and/or a non-ionic surfactant;
ii) 5-70%, preferably 5-40% of a builder;
iii) 0-30%, preferably 1-12% of a peroxide;
iv) 0-10%, preferably 1-6% of a peroxide activator and /or 0-1%, preferably 0.1-0.3% of a bleaching catalyst;
v) 0.005-2%, preferably 0.01-1% of at least one fluorescent whitening agent;
vi) 0.005-2%, preferably 0.01-1% of at least one whitening pigment of the invention and
vii) 0.005-10%, preferably 0.1-5% of one or more auxiliaries, each, by weight, based on the total weight of the detergent.

The anionic surfactant component may be, e.g., a sulphate, sulphonate or carboxylate surfactant, or a mixture of these.

Preferred sulphates are alkyl sulphates having 12-22 carbon atoms in the alkyl radical, optionally in combination with alkyl ethoxy sulphates having 10-20 carbon atoms in the alkyl radical.

Preferred sulphonates include alkyl benzene sulphonates having 9-15 carbon atoms in the alkyl radical.

In each case, the cation is preferably an alkali metal, especially sodium.

Preferred carboxylates are alkali metal sarcosinates of formula R-CO(R¹)CH₂COOM¹ in which R is alkyl or alkenyl having 9-17 carbon atoms in the alkyl or alkenyl radical, R¹ is C₁-C₄alkyl and M¹ is an alkali metal.

The nonionic surfactant component may be, e.g., a condensate of ethylene oxide with a C₉-C₁₅ primary alcohol having 3-8 moles of ethylene oxide per mole.

The builder component may be an alkali metal phosphate, especially a tripolyphosphate; a carbonate or bicarbonate, especially the sodium salts thereof; a silicate or disilicate; an aluminosilicate; a polycarboxylate; a polycarboxylic acid; an organic phosphonate; or an aminoalkylene poly(alkylene phosphonate); or a mixture of these.

Preferred silicates are crystalline layered sodium silicates of the formula NaHSiₘO₂ₘ₊₁.pH₂O or Na₂SiₘO₂ₘ₊₁.pH₂O in which m is a number from 1.9 to 4 and p is 0 to 20.

Preferred aluminosilicates are the commercially available synthetic materials designated as Zeolites A, B, X or HS, or mixtures of these, Zeolite A being preferred.

Preferred polycarboxylates include hydroxypolycarboxylates, in particular citrates, polyacrylates and their copolymers with maleic anhydride.

Preferred polycarboxylic acids include nitrilotriacetic acid and ethylene diamine tetraacetic acid.

Preferred organic phosphonates or aminoalkylene poly(alkylene phosphonates) are alkali metal ethane 1-hydroxy diphosphonates, nitrilo trimethylene phosphonates, ethylene diamine tetra methylene phosphonates and diethylene triamine penta methylene phosphonates.

Any peroxide component may be any organic or inorganic peroxide compound, described in the literature or available on the market, which bleaches textiles at conventional washing temperatures, e.g., temperatures in the range of from 5°C to 90°C. In particular, the organic peroxides are, for example, monoperoxides or polyperoxides having alkyl chains of at least 3, preferably 6 to 20, carbon atoms; in particular diperoxydicarboxylates having 6 to 12 carbon atoms, such as diperoxyperazelates, diperoxypersebacates, diperoxyphthalates and/or diperoxydodecanedioates, especially their corresponding free acids, are of interest. It is preferred, however, to employ very active inorganic peroxides, such as persulphate, perborate and/or percarbonate. It is, of course, also possible to employ mixtures of organic and/or inorganic peroxides. The peroxides, especially the inorganic peroxides, are preferably activated by the inclusion of an activator such as tetraacetyl ethylenediamine or nonoyloxybenzene sulphonate. Bleaching catalysts, which may be added, include, e.g., enzymatic peroxide precursors and/or metal complexes. Preferred metal complexes are manganese or iron complexes such as manganese or iron phthalocyanines or the complexes described in EP-A-0509787.

The detergents used will usually contain one or more auxiliaries such as soil suspending agents, for example, sodium carboxymethylcellulose; salts for adjusting the pH, for example, alkali or alkaline earth metal silicates; foam regulators, for example, soap; salts for adjusting the spray drying and granulating properties, for example, sodium sulphate; perfumes; and also, if appropriate, antistatic and softening agents, such as smectic clays; enzymes, such as amylases and proteases; photobleaching agents; pigments; and/or shading agents. These constituents should, of course, be stable to any bleaching system employed.

The following Examples illustrate the invention, without intending to be restrictive in nature; parts and percentages are by weight unless otherwise stated.

### A. Preparation of Whitening Pigments

### Example 1

To a solution of 84g of a 59.7% aqueous pentamethylol-melamine (LYOFIX^{™} CHN) and 300ml of water, 4.5g of the compound of formula 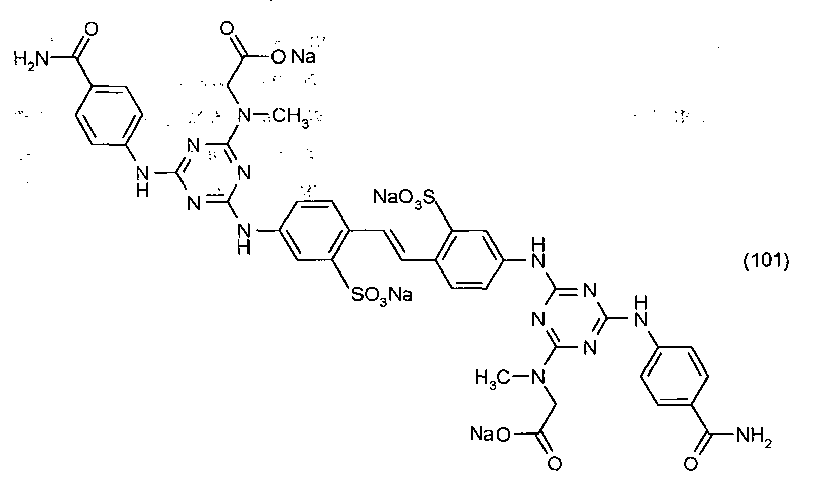 are added with stirring and the pH adjusted to 3.9 by the addition of 37% aqueous hydrochloric acid. The reaction mixture is heated to 70°C, the pH adjusted to 2.0 by the addition of 37% aqueous hydrochloric acid and stirred at this temperature for 4 hours. After cooling to room temperature, the pH is adjusted to 9.5-10 by addition of 32% aqueous sodium hydroxide solution, the precipitated solids filtered, washed with water and dried under vacuum at 80°C.

21 g of the pigment are homogenised and wet milled in 81.9g of water and 2.1 g of dispersant (Pluronic^{™} F 108) with zirconium oxide spheres (diameter 1µm) for 30 minutes resulting in a formulation containing 20% whitener pigment with an average particle size of 0.99µm.

### Example 2

4.7g of the compound of formula 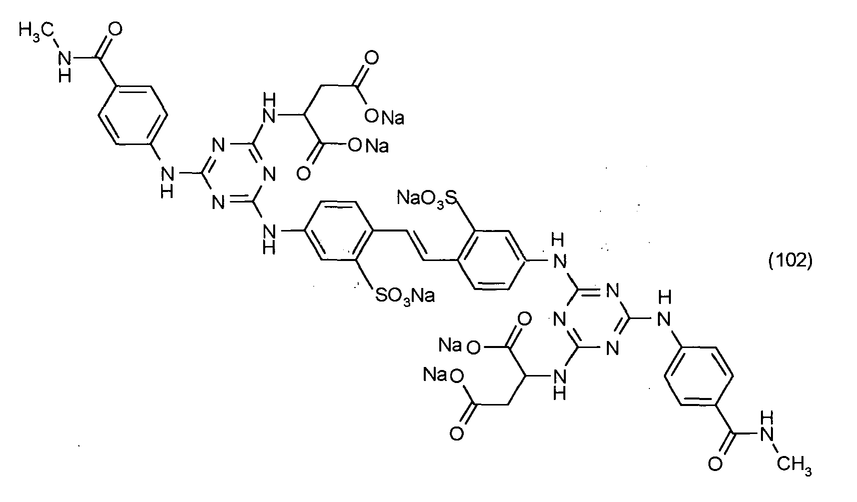 are stirred into a solution of 84g of a 59.7% aqueous pentamethylol-melamine (LYOFIX^{™} CHN) and 300ml of water. To the resulting suspension 37% aqueous hydrochloric acid is added slowly to pH 1.5-2.0 and the mass stirred for 4 hours at 70°C. After cooling to room temperature, 500ml of a water/acetone (10:1) mixture are added and the pH adjusted to 9.5-10 by the addition of 32% aqueous sodium hydroxide solution. The resulting suspension is filtered and the solids washed with water and dried under vacuum at 80°C.

21g of the pigment are homogenised and wet milled in 81.9g of water and 2.1g of dispersant (Pluronic^{™} F 108) with zirconium oxide spheres (diameter 1 µm) for 30 minutes resulting in a formulation containing 20% whitener pigment with an average particle size of 0.97µm.

### Example 3

5.0g of the compound of formula 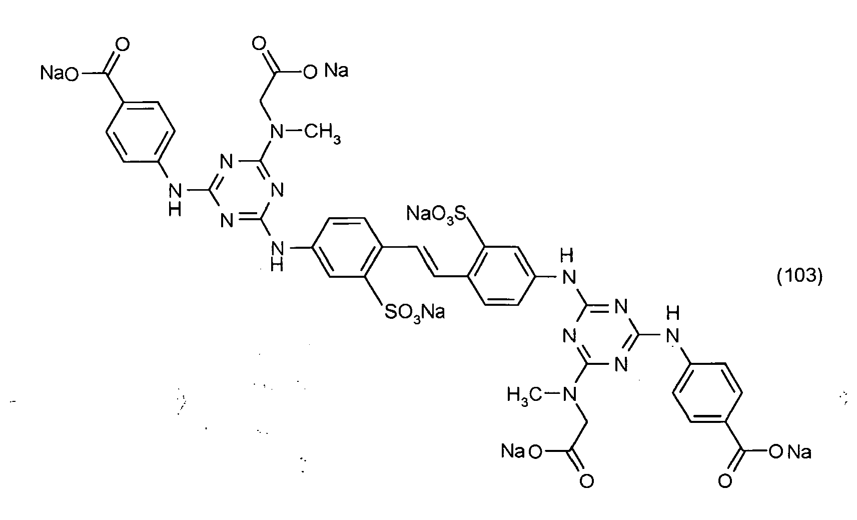 are stirred into a solution of 83.8g of a 59.7% aqueous pentamethylol-melamine (LYOFIX^{™} CHN) and 300ml of water. To the resulting solution, 37% aqueous hydrochloric acid is added slowly to pH 3.9 and the mass stirred for 2 hours at 70°C, the pH then adjusted to 2.2 with 37% aqueous hydrochloric acid, stirring continued for a further 2 hours at 70°C, the pH then adjusted to 1.4 with 37% aqueous hydrochloric acid and again stirred for a further 2 hours at 70°C. After cooling to room temperature, the pH is adjusted to 9.5-10 by the addition of 32% aqueous sodium hydroxide solution. The resulting suspension is filtered and the solids washed with water and dried under vacuum at 80°C.

### Example 4

By proceeding as described in Example 3, but replacing the compound of formula (103) by 4.4g of the compound of formula 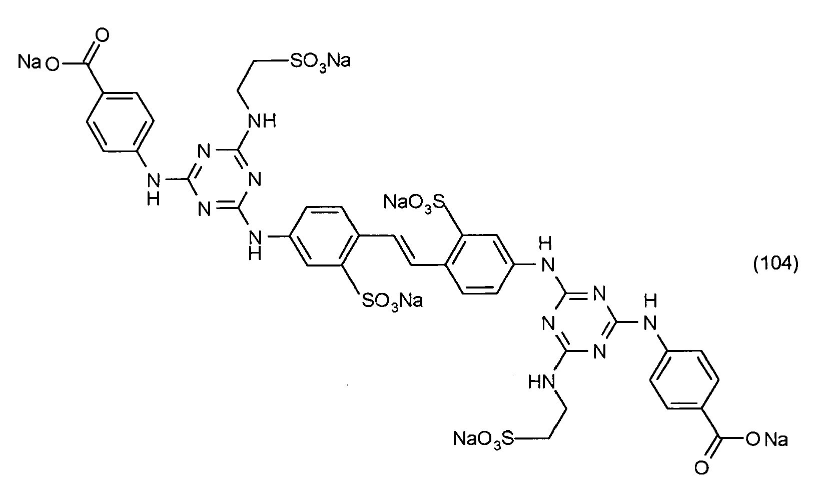 a corresponding whitening pigment is obtained.

### Example 5

4.4g of the compound of formula (101) are stirred with 300ml of water and 62.9g of a 70% aqueous trimethylol-melamine (LYOFIX^{™} MLF New) solution. To the resulting solution, 37% aqueous hydrochloric acid is added to pH 3.9, the reaction mass stirred for 2 hours at 70°C, the pH then adjusted to 2.2 with 37% aqueous hydrochloric acid, stirring continued for a further 2 hours at 70°C, the pH then adjusted to 1.4 with 37% aqueous hydrochloric acid and again stirred for a further 2 hours at 70°C. After cooling to room temperature, the pH is adjusted to 9.5-10 by the addition of 32% aqueous sodium hydroxide solution. The resulting suspension is filtered and the solids washed with water and dried under vacuum at 80°C.

### B. Preparation of Fluorescent Whitening Agents

### Example 6 - Compound (101)

10g of 4,4'-bis{[4-(4-carbonamidoanilino)-6-chloro-1,3,5-triazin-2-yl]amino}stilbene-2,2'-disulphonic acid di-sodium salt, obtained in a known manner by firstly reacting cyanuric chloride with 4,4'-diaminostilbene-2,2'-disulphonic acid and then reacting the reaction product so obtained with 4-carbonamido aniline, are suspended in a mixture of 30ml of water and 30ml of methyl cellusolve. To the stirred suspension, 1.8g of sarcosine are added and the mixture heated to 80-90°C, the pH being maintained at 8.0-8.5 by addition of 30% aqueous sodium hydroxide solution. After stirring for 45 minutes, the pH remains constant and a yellow solution results. The solution is cooled to room temperature, poured into a mixture of 1000ml of acetone and 9ml of concentrated hydrochloric acid and stirring continued for 1 hour. The precipitated solids are filtered, washed with actone and water and the residue heated under reflux with 150ml of acetone for 1 hour. After cooling to room temperature the solids are filtered and dried under vacuum at 80°C. The dried solids are then suspended in 100ml of water, the pH adjusted to 9.0 with aqueous 2N sodium hydroxide solution, stirred at 80°C, clarified and the filtrate evaporated to dryness on a rotary evaporator. After drying at 80°C, there are obtained 8.4g of the compound of formula (101).

### Example 7 - Compound (102)

Following the procedure described in Example 6, but replacing the 1.8g of sarcosine by 2.7g of aspartic acid and the 10g of 4,4'-bis{[4-(4-carbonamidoanilino)-6-chloro-1,3,5-triazin-2-yl]amino}stilbene-2,2'-disulphonic acid di-sodium salt by 11.9g of 10g of 4,4'-bis{[4-(4-N-methylcarbonamidoanilino)-6-chloro-1,3,5-triazin-2-yl]amino}stilbene-2,2'-disulphonic acid di-sodium salt 9.3g of the compound of formula (102) are obtained.

### Examples 8-13

Following the procedure described in Example 6, but replacing the 4,4'-bis{[4-(4-carbonamidoanilino)-6-chloro-1,3,5-triazin-2-yl]amino}stilbene-2,2'-disulphonic acid di-sodium salt by the appropriately substituted 4,4'-bis{[4-(4-anilino)-6-chloro-1,3,5-triazin-2-yl]amino}stilbene-2,2'-disulphonic acid di-sodium salt and the sarcosine by the appropriate amino acid, the following derivatives of formula 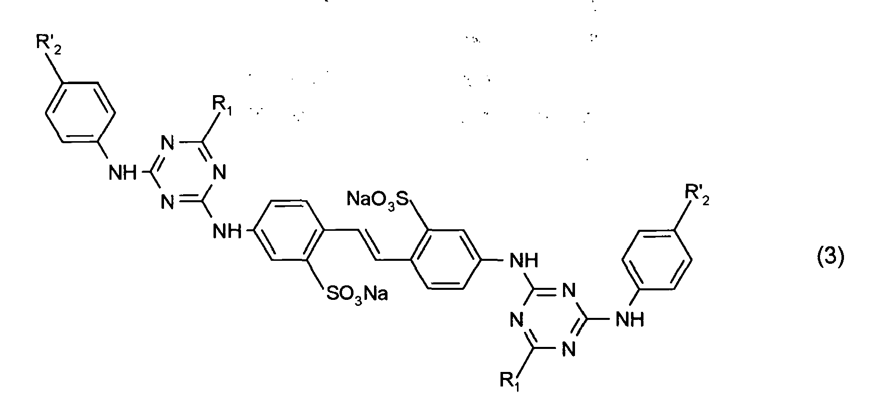 are obtained, as summarized in the following Table 1.

**Table 1**

| **Example** | **Compound** | **R'₂** | **R₁** |
|---|---|---|---|
| 8 | (103) | -CO₂Na | -N(CH₃)CH₂CO₂Na |
| 9 | (104) | -CO₂Na | -NHCH₂CH₂SO₃Na |
| 10 | (105) | -CONH₂ | -NHCH₂CH₂SO₃Na |
| 11 | (106) | -CONH₂ | -NHCH(CO₂Na)CH₂CO₂Na |
| 12 | (107) | -CONHCH₃ | -N(CH₃)CH₂CO₂Na |
| 13 | (108) | -CONHCH₃ | -NHCH₂CH₂SO₃Na |

### C. Application Examples

To a coating colour having a solids content of 62% and consisting of 60% calcium carbonate and 40% clay, 0.2 parts of polyvinyl alcohol and 9 parts of SBR binder are added, based on the weight of the pigment, followed by sufficient amounts of the dispersions of Examples 1 or 2 incorporating the requisite quantities of fluorescent whitening agents (101) or (102). After stirring for 15 minutes to homogenize the coating colour, a base paper free of fluorescent whitening agent is coated using a laboratory blade coater with a coating speed of 50m/min. such that a coat weight of 12g/m² results. After drying, the CIE Whiteness and Iso-fluorescence values are recorded as summarized in Table 2 below

**Table 2**

| Example Nr. | Parts FWA¹ | CIE Whiteness | Fluorescence |
|---|---|---|---|
| 14 | 0.1 | 94 | 7.4 |
| 15 | 0.2 | 107.2 | 11.2 |
| 16 | 0.4 | 113.5 | 13.4 |

| | | | |
|---|---|---|---|
| ¹ Parts of fluorescent whitening agent (101) incorporated into whitener pigment of Example 1 based on total weight of coating composition. | | | |

In a further experiment, the light stability of the whitening pigment of Example 2 was assessed by exposure of a paper, coated as described above with a quantity of pigment dispersion incorporating 0.2 parts of the fluorescent whitening agent of formula (102), based on the total weight of the coating composition, to a light source of neon tubes at a distance of 20cm. The decrease in CIE Whiteness after exposure is documented in the following Table 3:

**Table 3: Example 17**

| | | | | |
|---|---|---|---|---|
| **Exposure Time** | 0 | 30 hours | 60 hours | 120 hours |
| **CIE Whiteness** | 93 | 87.5 | 85.6 | 85 |

The above results clearly demonstrate the excellent stability of the whitening pigment of Example 2 towards light.

## Claims

1. A whitening pigment comprising the reaction product of
(a) a melamine-formaidehyde and/or a melamine-urea polycondensation product and
(b) a water-soluble fluorescent whitening agent of the formula 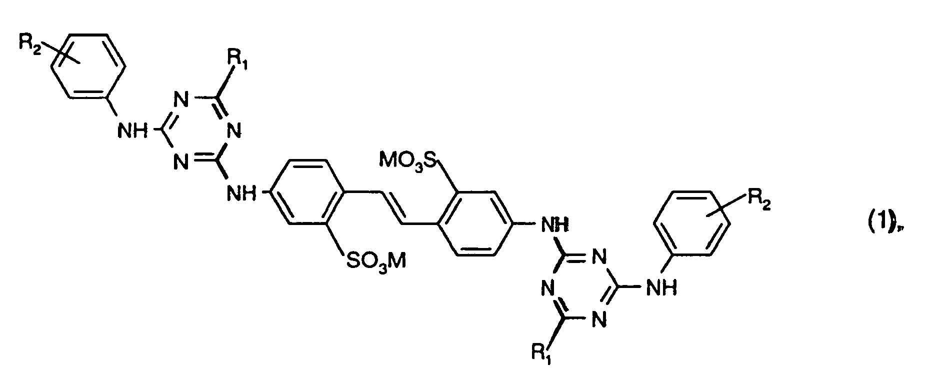
wherein
R₁ represents -OH, -OC₁-C₄alkyl, -Oaryl, -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl) -NHC₁-C₄alkoxy-C₁-C₄alkyl, -N(C₁-C₄alkoxy-C₁-C₄alkyl)₂, morpholino, piperidino, pyrrolidino or the residue of an amino acid from which a hydrogen atom has been abstracted from the amino group,
R₂ represents -CONH₂, -CONHC₁-C₄alkyl or -COOM and
M is hydrogen, sodium, potassium, calcium, magnesiurr<, ammonium, mono- di-, tri- or tetra-substituted C₁-C₄alkylammonium or C₂-C₄hydnnxyalkylammonium or mixtures thereof.

2. A whitening pigment according to claim 1, wherein the component
(a) is a melamine-formaldehyde polycondensation product.

3. A whitening pigment according to claim 1 or claim 2, wherein, in the compound of formula (1),
R₁ represents -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino or pyrrolidino.

4. A whitening pigment according to claim 3, wherein, in the compound of formula (1),
R₁ represents -N(C₁-C₄alkyl)₂, -N(C₂-C₄hydroxyalkyl)₂, -N(C₂-C₄alkyl)(C₂-C₄hydroxyalkyl), -N(C₁-C₄alkoxy-C₁-C₄alkyl)₂ or morpholino.

5. A whitening pigment according to claim 1 or claim 2, wherein, in the compound of formula (1),
R₁ represents an amino acid residue from which a hydrogen atom has been abstracted from the amino group.

6. A whitening pigment according to claim 5 in which the amino acid from which the amino acid residues R₁ are derived is glycine, alanine, sarcosine, serine, cysteine, phenylalanine, tyrosine (4-hydroxyphenylalanine), diiodotyrosine, tryptophan (β-indolylalanine), histidine ((β-imidazolylalanine), α-aminobutyric acid, methionine, valine (α-aminoisovaleric acid), norvaline, leucine (α-aminoisocaproic acid), isoleucine (α-amino-β-methylvaleric acid), norleucine (α-amino-n-caproic acid), arginine, ornithine (α,δ-diaminovaleric acid), lysine (α,ε-diaminocaproic acid), aspartic acid (aminosuccinic acid), glutamic acid (α-aminoglutaric acid), threonine, hydroxyglutamic acid, iminodiacetic acid or taurine, or a mixture or an optical isomer thereof.

7. A whitening pigment according to claim 1 or claim 2, wherein, in the compound of formula (1),
M represents hydrogen, sodium or potassium.

8. A process for the preparation of a whitening pigment according to claim 1, whereby the melamine-formaldehyde or melamine-urea polycondensation product is mixed with a fluorescent whitening agent of formula (1) in aqueous medium, reacted with mineral acid, and subsequently treated with base.

9. A compound of formula 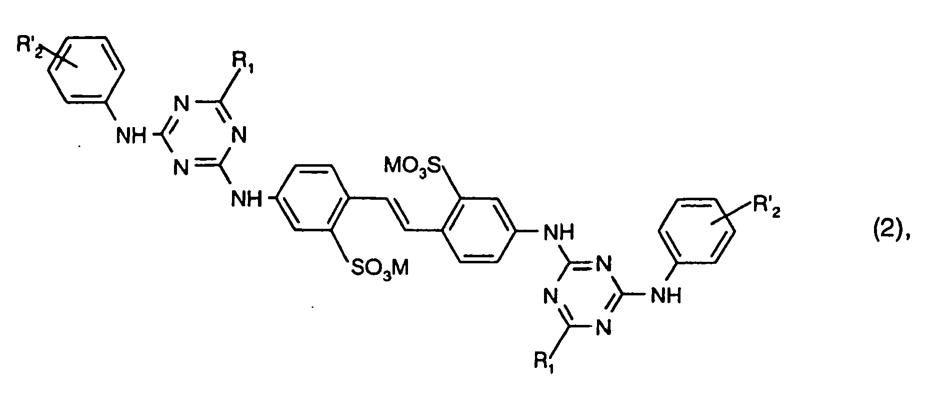 in which
R₁ represents -OH, -OC₁-C₄alkyl, -Oaryl, -NH₂, -NHC₁-C₄alkyl, -N(C₁-C₄alkyl)₂, -NHC₂-C₄hydroxyalkyl, -N(C₂-C₄hydroxyalkyl)₂, -N(C₁-C₄alkyl)(C₂-C₄hydroxyalkyl), -NHC₁-C₄alkoxy-C₁-C₄alkyl, -N(C₁-C₄alkoxy-C₁-C₄alkyl)₂, morpholino, piperidino, pyrrolidino or the residue of an amino acid from which a hydrogen atom has been abstracted from the amino group,
R'₂ represents -CONH₂, -CONHC₁-C₄alkyl or -COOM and
M is hydrogen, sodium, potassium, calcium, magnesium, ammonium, mono- di-, tri- or tetra-substituted C₁-C₄alkylammonium or C₂-C₄hydroxyalkylammonium or mixtures thereof.

10. A process for the preparation of a compound of formula (2), according to claim 9, by reacting, under known reaction conditions, cyanuric chloride, successively, in any desired sequence, with each of 4,4'-diamino-2,2'-stilbene disulphonic acid or a salt thereof, an amino compound capable of introducing a group 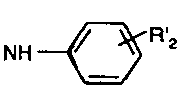 and a compound capable of introducing a group R₁, in which R₁ and R'₂ are as defined in claim 9.

11. Use of the compound of formula (2) as defined in claim 9 for the preparation of the whitening pigment, as described in claim 8.

12. A paper coating composition comprising, in addition to 0.01 to 5% by weight of the whitening pigment according to claim 1,
(i) 60 to 150 parts by weight of inorganic pigment,
(ii) from 3 to 25 parts by weight of binder, of which optionally up to half consists of natural co-binder,
(iii) up to 1 part by weight of thickener and
(iv) up to 2 parts by weight of wet-strength agent.

13. Use of the coating composition according to claim 12, for the fluorescent whitening of paper.

14. Paper which has been treated with a coating composition, according to claim 12.

15. Use of the whitening pigments, according to claim 1, for increasing the Sun Protection Factor (SPF) rating or for the fluorescent whitening of a textile fibre materials.

16. Use of the whitening pigments, according to claim 1, for improving the aspect of solid detergent compositions.

## Patentansprüche

1. Weißmacherpigment, umfassend das Reaktionsprodukt von
(a) einem Melamin-Formaldehyd- und/oder einem Melamin-Harnstoff-Polykondensationsprodukt und
(b) einem wasserlöslichen fluoreszierenden Weißmacher der Formel 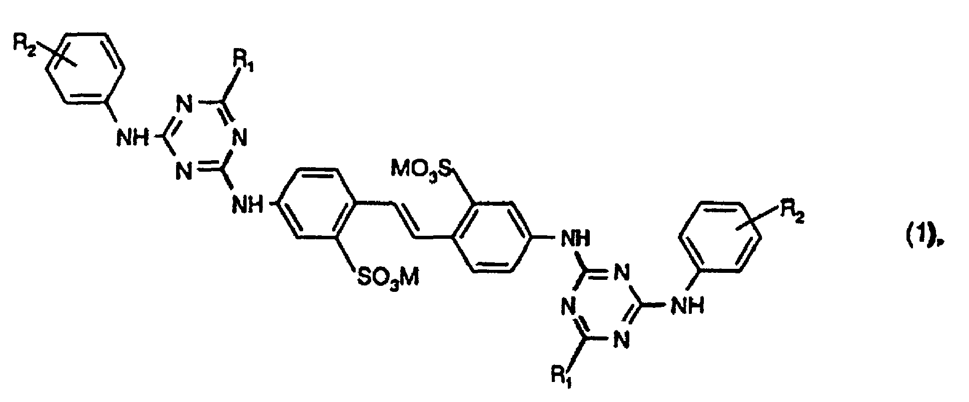
worin
R₁ -OH, -OC₁-C₄-Alkyl, -O-Aryl, -NH₂, -NHC₁-C₄-Alkyl, -N(C₁-C₄-Alkyl)₂, -NHC₂-C₄-Hydroxyalkyl, -N(C₂-C₄-Hydroxyalkyl)₂, -N(C₁-C₄-Alkyl)(C₂-C₄-hydroxyalkyl), -NHC₁-C₄-Alkoxy-C₁-C₄-alkyl, -N(C₁-C₄-Alkoxy-C₁-C₄-alkyl)₂, Morpholin, Piperidin, Pyrrolidin oder den Rest einer Aminosäure, von der das Wasserstoffatom von der Aminogruppe entfernt wurde, darstellt,
R₂ -CONH₂, -CONHC₁-C₄-Alkyl oder -COOM darstellt und
M Wasserstoff, Natrium, Kalium, Calcium, Magnesium, Ammonium, mono-, di-, tri- oder tetra-substituiertes C₁-C₄-Alkylammonium oder C₂-C₄-Hydroxyalkylammonium oder Mischungen davon darstellt.

2. Weißmacherpigment nach Anspruch 1, worin die Komponente
(a) ein Melamin-Formaldehyd-Polykondensationsprodukt darstellt.

3. Weißmacherpigment nach Anspruch 1 oder Anspruch 2, worin in der Verbindung der Formel (1)
R₁ -NH₂, -NHC₁-C₄-Alkyl, -N(C₁-C₄-Alkyl)₂, -NHC₂-C₄-Hydroxyalkyl, -N(C₂-C₄-Hydroxyalkyl)₂, -N(C₁-C₄-Alkyl)(C₂-C₄-hydroxyalkyl), -NHC₁-C₄-Alkoxy-C₁-C₄-alkyl, -N(C₁-C₄-Alkoxy-C₁-C₄-alkyl)₂, Morpholin, Piperidin oder Pyrrolidin darstellt.

4. Weißmacherpigment nach Anspruch 3, worin in der Verbindung der Formel (1)
R₁ -N(C₁-C₄-Alkyl)₂, -N(C₂-C₄-Hydroxyalkyl)₂, -N(C₁-C₄-Alkyl)(C₂-C₄-hydroxyalkyl), -N(C₁-C₄-Alkoxy-C₁-C₄-alkyl)₂ oder Morpholin darstellt.

5. Weißmacherpigment nach Anspruch 1 oder Anspruch 2, worin in der Verbindung der Formel (1)
R₁ einen Aminosäurerest, bei dem ein Wasserstoffatom von der Aminogruppe entfernt wurde, darstellt.

6. Weißmacherpigment nach Anspruch 5, worin die Aminosäure, von welcher die Aminosäurereste R₁ abgeleitet sind, Glycin, Alanin, Sarcosin, Serin, Cystein, Phenylalanin, Tyrosin (4-Hydroxyphenylalanin), Diiodtyrosin. Tryptophan (β-Indolylalanin), Histidin (β-Imidazolylalanin), α-Aminobuttersäure, Methionin, Valin (α-Aminoisovaleriansäure), Norvalin, Leucin (α-Aminoisocapronsäure), Isoleucin . (α-Amino-β-methylvaleriansäure), Norleucin (α-Amino-n-capronsäure), Arginin, Ornithin (α,δ-Diaminovaleriansäure), Lysin (α,ε-Diaminocapronsäure), Asparaginsäure (Aminobernsteinsäure), Glutaminsäure (α-Aminoglutarsäure), Threonin, Hydroxyglutaminsäure, Iminodiessigsäure oder Taurin, oder eine Mischung oder ein optisches Isomer davon darstellt.

7. Weißmacherpigment nach Anspruch 1 oder Anspruch 2, worin in der Verbindung (1)
M Wasserstoff, Natrium oder Kalium darstellt.

8. Verfahren zur Herstellung eines Weißmacherpigments nach Anspruch 1, worin das Melamin-Formaldehyd- oder Melamin-Harnstoff-Polykondensationsprodukt mit einem fluoreszierenden Weißmacher der Formel (1) in wässrigem Medium gemischt wird, mit einer Mineralsäure umgesetzt wird und anschließend mit einer Base behandelt wird.

9. Verbindung der Formel 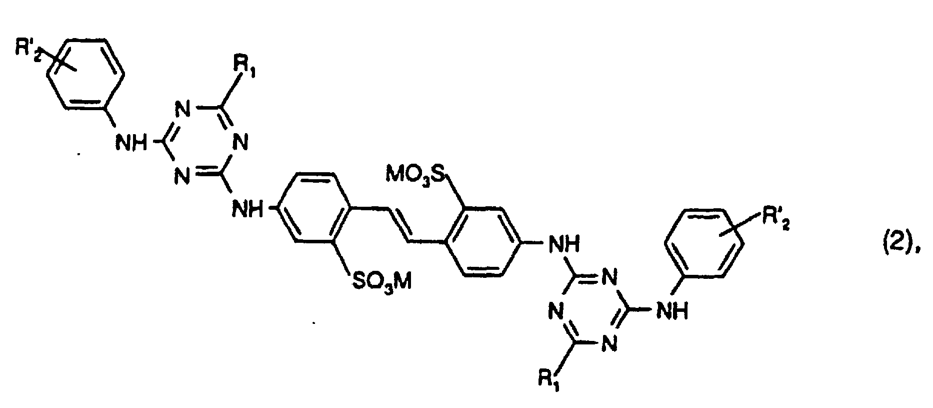 worin
R₁ -OH, -OC₁-C₄-Alkyl, -O-Aryl, -NH₂, -NHC₁-C₄-Alkyl, -N(C₁-C₄-Alkyl)₂, -NHC₂-C₄-Hydroxyalkyl, -N(C₂-C₄-Hydroxyalkyl)₂, -N(C₁-C₄-Alkyl)(C₂-C₄-hydroxyalkyl), -NHC₁-C₄-Alkoxy-C₁-C₄-alkyl, -N(C₁-C₄-Alkoxy-C₁-C₄-alkyl)₂, Morpholin, Piperidin, Pyrrolidin oder den Rest einer Aminosäure, von der das Wasserstoffatom von der Aminogruppe entfernt wurde, darstellt,
R'₂ -CONH₂, -CONHC₁-C₄-Alkyl oder -COOM darstellt und
M Wasserstoff, Natrium, Kalium, Calcium, Magnesium, Ammonium, mono-, di-, tri- oder tetra-substituiertes C₁-C₄-Alkylammonium oder C₂-C₄-Hydroxyalkylammonium oder Mischungen davon darstellt.

10. Verfahren zur Herstellung einer Verbindung der Formel (2) nach Anspruch 9 durch Umsetzung unter bekannten Reaktionsbedingungen von Cyanurchlorid mit der Reihe nach in jeder gewünschten Reihenfolge jeweils 4,4'-Diamino-2,2'-stilbendisulfonsäure oder einem Salz davon, einer Amino-Verbindung, welche zur Einführung einer Gruppe 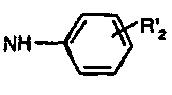 in der Lage ist, und einer Verbindung, welche zur Einführung einer Gruppe R₁ in der Lage ist, worin R₁ und R'₂ wie in Anspruch 9 definiert sind.

11. Verwendung der Verbindung der Formel (2), wie sie in Anspruch 9 definiert ist, zur Herstellung des Weißmacherpigments, wie es in Anspruch 8 beansprucht ist.

12. Papierbeschichtungszusammensetzung, umfassend zusätzlich zu 0,01 bis 5 Gew.-% des Weißmacherpigments nach Anspruch 1,
(i) 60 bis 150 Gewichtsteile anorganisches Pigment,
(ii) 3 bis 25 Gewichtsteile Bindemittel, welches wahlweise bis zur Hälfte aus natürlichem Co-Bindemittel besteht,
(iii) bis zu 1 Gewichtsteil Verdickungsmittel und
(iv) bis zu 2 Gewichtsteilen Nassfestmittel.

13. Verwendung der Beschichtungszusammensetzung nach Anspruch 12 für das fluoreszierende Weißmachen von Papier.

14. Papier, welches mit einer Beschichtungszusammensetzung nach Anspruch 12 behandelt wurde.

15. Verwendung der Weißmacherpigmente nach Anspruch 1 zur Erhöhung der Sonnenschutzfaktorbewertung (SPF) oder zum fluoreszierenden Weißmachen eines Textilfasermaterials.

16. Verwendung der Weißmacherpigmente nach Anspruch 1 zur Verbesserung des Erscheinungsbilds von festen Reinigungsmittelzusammensetzungen.

## Revendications

1. Pigment de blanchiment comprenant le produit réactionnel
(a) d'un produit de polycondensation de mélamine-formaldéhyde et/ou de mélamine-urée et
(b) d'un agent de blanchiment fluorescent hydrosoluble de formule 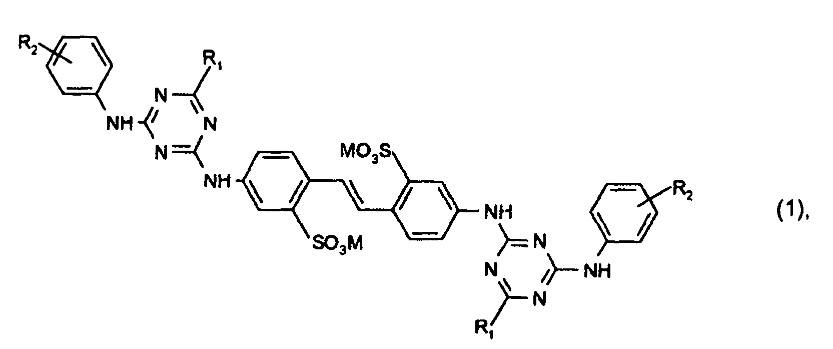
dans laquelle
R₁ représente un groupe -OH, -O-alkyle en C₁-C₄, -O-aryle, -NH₂, -NH- alkyle en C₁-C₄, -N(alkyle en C₁-C₄)₂, -NH-hydroxyalkyle en C₂-C₄, -N-(hydroxyalkyle en C₂-C₄)₂, -N-alkyle en C₁-C₄-hydroxyalkyle en C₂-C₄, -NH-alkoxy en C₁-C₄-alkyle en C₁-C₄, -N(alkoxy en C₁-C₄-alkyle en C₁-C₄)₂, morpholino, pipéridino, pyrrolidino ou le résidu d'un acide aminé d'où a été éliminé un atome d'hydrogène du groupe amino,
R₂ représente un groupe -CONH₂, -CONH-alkyle en C₁-C₄ ou -COOM et
M représente un atome d'hydrogène, de sodium, de potassium, de calcium, de magnésium, un groupe ammonium, (alkyle en C₁-C₄) ammonium ou hydroxy(alkyl en C₂-C₄)ammonium mono- di-, tri- ou tétrasubstitué ou leurs mélanges.

2. Pigment de blanchiment selon la revendication 1, où le composant (a) est un produit de polycondensation de mélamine-formaldéhyde.

3. Pigment de blanchiment selon la revendication 1 ou 2, où dans le composé de formule (1)
R₁ représente un groupe -NH₂, -NH-alkyle en C₁-C₄, -N(alkyle en C₁-C₄)₂, -NH-hydroxyalkyle en C₂-C₄, -N-(hydroxyalkyle en C₂-C₄)₂, -N-alkyle en C₁-C₄-hydroxyalkyle en C₂-C₄, -NH-alkoxy en C₁-C₄-alkyle en C₁-C₄, -N- (alkoxy en C₁-C₄-alkyle en C₁-C₄)₂, morpholino, pipéridino ou pyrrolidino.

4. Pigment de blanchiment selon la revendication 3, où, dans le composé de formule (1),
R₁ représente un groupe -N(alkyle en C₁-C₄)₂, -N-(hydroxyalkyle en C₂-C₄)₂, -N-alkyle en C₁-C₄-hydroxyalkyle en C₂-C₄, -N- (alkoxy en C₁-C₄-alkyle en C₁-C₄)₂ ou morpholino.

5. Pigment de blanchiment selon la revendication 1 ou la revendication 2, où, dans le composé de formule (1),
R₁ représente un résidu d'acide aminé d'où a été éliminé un atome d'hydrogène du groupe amino.

6. Pigment de blanchiment selon la revendication 5 dans lequel l'acide aminé dont dérivent les résidus d'acide aminé R₁ est la glycine, l'alanine, la sarcosine, la sérine, la cystéine, la phénylalanine, la tyrosine (4-hydroxyphénylalanine), la diiodotyrosine, le tryptophane (β-indolylalanine), l'histidine (β-imidazolylalanine), l'acide α-aminobutyrique, la méthionine, la valine (acide α-aminoisovalérique), la norvaline, la leucine (acide α-aminoisocaproïque), l'isoleucine (acide α-amino-β-méthylvalérique), la norleucine (acide α-amino-n-caproïque), l'arginine, l'ornithine (acide α,δ-diaminovalérique), la lysine (acide α,ε-diaminocaproïque), l'acide aspartique (acide aminosuccinique), l'acide glutamique (acide α-aminoglutarique), la thréonine, l'acide hydroxyglutamique, l'acide iminodiacétique ou la taurine, ou un mélange ou un isomère optique de ceux-ci.

7. Pigment de blanchiment selon la revendication 1 ou la revendication 2, où, dans le composé de formule (1),
M représente un atome d'hydrogène, de sodium ou de potassium.

8. Procédé pour la préparation d'un pigment de blanchiment selon la revendication 1, où on mélange le produit de polycondensation de mélamine-formaldéhyde ou de mélamine-urée avec un agent de blanchiment fluorescent de formule (1) en milieu aqueux, on fait réagir sur un acide minérale et on traite ensuite par une base.

9. Composé de formule 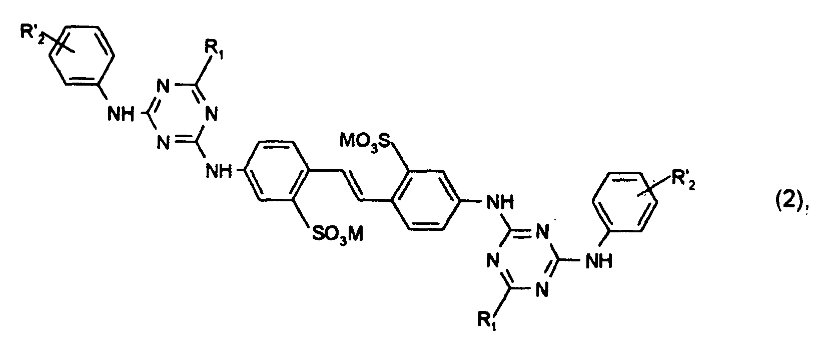 dans laquelle
R₁ représente un groupe -OH, -O-alkyle en C₁-C₄, -O-aryle, -NH₂, -NH-alkyle en C₁-C₄, -N(alkyle en C₁-C₄)₂, -NH-hydroxyalkyle en C₂-C₄, -N-(hydroxyalkyle en C₂-C₄)₂, -N-alkyle en C₁-C₄-hydroxyalkyle en C₂-C₄, -NH-alkoxy en C₁-C₄-alkyle en C₁-C₄, -N-(alkoxy en C₁-C₄-alkyle en C₁-C₄)₂, morpholino, pipéridino, pyrrolidino ou le résidu d'un acide aminé d'où a été éliminé un atome d'hydrogène du groupe amino,
R'₂ représente un groupe -CONH₂, -CONH-alkyle en C₁-C₄ ou -COOM et
M représente un atome d'hydrogène, de sodium, de potassium, de calcium, de magnésium, un groupe ammonium, (alkyle en C₁-C₄)ammonium ou (hydroxyalkyle C₂-C₄)ammonium mono- di-, tri- ou tétra-substitué ou leurs mélanges.

10. Procédé pour la préparation d'un composé de formule (2) selon la revendication 9, en faisant réagir, sous conditions réactionnelles connues, du chlorure de cyanuryle, successivement, dans une séquence quelconque désirée, sur chacun des acide 4,4'-diamino-2,2'-stilbènedisulfonique ou un sel de celui-ci, un composé amino capable d'introduire un groupe 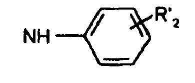 et un composé capable d'introduire un groupe R₁, dans lequel R₁ et R'₂ sont définis comme dans la revendication 9.

11. Utilisation du composé de formule (2) tel que défini dans la revendication 9 pour la préparation du pigment de blanchiment comme décrit dans la revendication 8.

12. Sauce de couchage du papier comprenant en plus de 0,01 à 5 % en masse du pigment de blanchiment selon la revendication 1,
(i) de 60 à 150 parties en masse de pigment inorganique,
(ii) de 3 à 25 parties en masse de liant, dont jusqu'à la moitié est constituée par un co-liant naturel,
(iii) jusqu'à 1 partie en masse d'épaississant et
(iv) jusqu'à 2 parties en masse d'agent de résistance à l'état humide.

13. Utilisation de la sauce de couchage selon la revendication 12, pour le blanchiment fluorescent du papier.

14. Papier qui a été traité par une sauce de couchage selon la revendication 12.

15. Utilisation des pigments de blanchiment selon la revendication 1, pour augmenter la valeur du facteur de protection solaire (FPS) ou pour le blanchiment fluorescent d'une matière fibreuse textile.

16. Utilisation des pigments de blanchiment selon la revendication 1, pour améliorer l'aspect des compositions de détergents solides.
